# EUROPÄISCHE PATENTSCHRIFT

(11) **EP 1 466 494 B1**
(45) Veröffentlichungstag und Bekanntmachung des Hinweises auf die Patenterteilung: **03.05.2006**
(21) Anmeldenummer: 03790664.1
(22) Anmeldetag: 30.07.2003
(51) Int. Cl.: H04Q 7/38, G01S 5/02

(54) **VERFAHREN ZUR POSITIONSBESTIMMUNG**
METHOD FOR POSITION DETERMINATION
PROCEDE DE DETERMINATION D'UNE POSITION

(30) Priorität: 13.08.2002 DE 10237134
(43) Veröffentlichungstag der Anmeldung: 13.10.2004
(73) Patentinhaber: SIEMENS AKTIENGESELLSCHAFT, 80333 München (DE)
(72) Erfinder: BECKMANN, Mark, 38124 Braunschweig (DE); GOTTSCHALK, Thomas, 12524 Berlin (DE)
(86) Internationale Anmeldenummer: PCT/DE2003/002567
(87) Internationale Veröffentlichungsnummer: WO 2004/021725

(56) Entgegenhaltungen:
- EP-A- 1 030 531
- WO-A-00/42445
- WO-A-98/01768
- US-A- 6 097 336

## Beschreibung

Die vorliegende Erfindung betrifft ein Verfahren zur Positionsbestimmung.

Derartige Verfahren finden unter Anderem in Mobilfunksystemen Anwendung.

Bei Mobilfunksystemen der dritten Generation, wie beispielsweise nach dem UMTS (Universal Mobile Telecommunications System) -Mobilfunkstandard arbeitenden Systemen sollen in den Mobilfunk-Endgeräten Positionsbestimmungsfunktionen integriert werden.

Bei dem UMTS-Standard sind drei Modi für die Übertragung über die Luftschnittstelle vorgesehen. Dabei handelt es sich um den FDD (Frequency Division Duplex) -Modus, den 3.84 MHz TDD (Time Division Duplex) -Modus und den 1.28 MHz TDD-Modus. Beim FDD-Modus erfolgt die Übertragung in "Up"- und "Downlink" -Richtung auf unterschiedlichen Frequenzen. Uplink bedeutet dabei die Übertragungsrichtung von einer Mobilstation UE (User Equipment) zu einer Basisstation, d.h. in UMTS einem Netzwerkelement NodeB. Bei Downlink handelt es sich entsprechend um die Übertragungsrichtung von einer NodeB zu der Mobilstation. Beim TDD-Modus wird nur eine Trägerfrequenz verwendet, wobei durch Zuweisung von Zeitschlitzen eine Trennung der Up- und Downlink-Richtung erfolgt. Der Hauptunterschied der zwei TDD-Modi liegt in der geringen Bandbreite des 1.28 MHz TDD-Modus gegenüber dem 3.84 MHz TDD-Modus. Die Teilnehmer werden bei allen Modi über orthogonale Codes getrennt.

Aus den technischen Spezifikationen TS 25.305 V3.7.0 und V4.2.0 des 3GGP (3^{rd} Generation Partnership Project) sind verschiedene Methoden zur Positionsbestimmung eines Mobilfunk-Endgerätes in UMTS-Netzwerken bekannt.

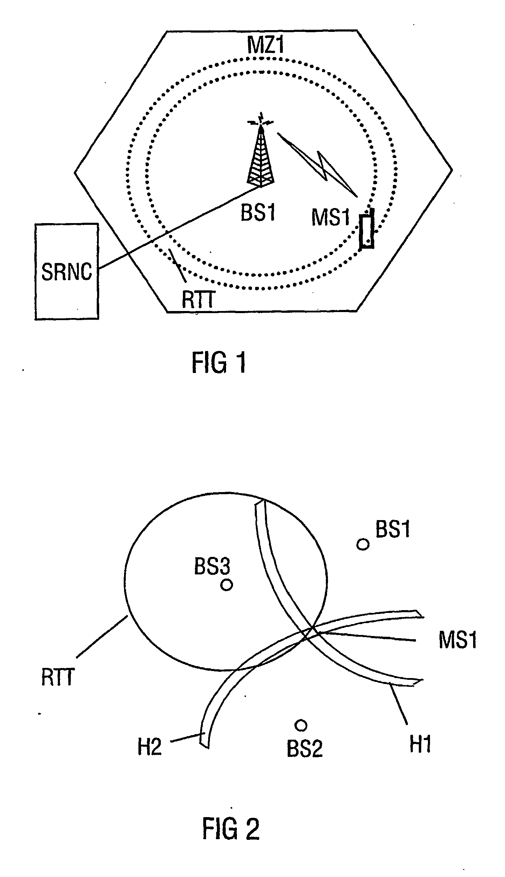

Figur 1 zeigt eine schematische Darstellung einer Positionsbestimmung nach der bekannten Cell-ID-Methode. Bei dieser Methode erfolgt die Positionsbestimmung anhand der Erkennung der Mobilfunkzelle, in der sich die Mobilstation zum Zeitpunkt der Positionsanfrage bzw. -bestimmung befindet. Figur 1 zeigt eine Mobilfunkzelle MZ1 mit einer Basisstation BS1 und einer Mobilstation MS1. Die Basisstation BS1 steht mit dem Netzwerkelement SRNC (Serving Radio Network Controller) in Verbindung. Der SRNC kann u.a. Positionsberechnungsfunktionen ausführen und die Positionsbestimmungsmethode auswählen. Die genaue Funktion des SRNC wird beispielsweise in der technischen Spezifikation TS 25.305 V4.2.0 des 3GGP beschrieben. Bei der Cell-ID-Methode wird der Mittelpunkt der Mobilfunkzelle MZ1 als Position der Mobilstation MS1 angenommen. Diese Art der Positionsbestimmung ist abhängig von der Größe der Mobilfunkzelle und gewährleistet dabei lediglich eine grobe Positionsbestimmung. Die Ungenauigkeiten liegen bei ca. 100 m und mehr. Verbesserungen hinsichtlich der Genauigkeit können durch Zusatzmessungen, wie z.B. Messung der Hin- und Rücklaufzeit RTT (Round Trip Time) erreicht werden. Dabei wird die Laufzeit eines bekannten Signals von der Mobilfunk-Basisstation BS1 zur Mobilstation MS1 und zurück ausgewertet. Diese Zeitmessung ergibt mathematisch verknüpft mit der Lichtgeschwindigkeit c einen Radius zwischen Mobilfunk-Basisstation und Mobilstation. Somit liegt das zu bestimmende Endgerät nicht nur grob bestimmt in der Mobilfunkzelle MZ1, sondern auf einem Kreis RTT in der Mobilfunkzelle.

Des Weiteren ist auch eine Positionsbestimmung mit aktiver Unterstützung durch GPS (Global Positioning System) bekannt,
wobei ein GPS-Empfänger GPS-Signale von vier sichtbaren Satelliten empfängt. Für eine solche Positionsbestimmung wird jedoch weitere Hardware benötigt. Darüber hinaus müssen Daten von Satelliten empfangen werden können.

Eine weitere bekannte Methode zur Positionsbestimmung ist die Positionsbestimmung entsprechend der OTDOA (Observed Time Difference of Arrival) -Methode basierend auf Messungen von Signalen über die Luftschnittstelle zwischen mehreren Netzwerkelementen NodeB und der zu lokalisierenden Mobilstation. Gemäß dieser Methode versucht die zu lokalisierende Mobilstation, ein Paar eines bekannten Signals von zwei ortsverschiedenen, benachbarten NodeBs zu detektieren und die Empfangszeitpunkte zu bestimmen. Die Empfangszeitpunkte der Signale von zwei ortsverschiedenen, benachbarten NodeBs werden dann zur Auswertung an die zuständige Positionsberechnungs-Funktion PCF (Position Calculation Function) derjenigen NodeB gesendet, welche für die zu lokalisierende Mobilstation verantwortlich ist. Auswerten heißt in diesem Zusammenhang, dass die PCF die Zeitdifferenz der Empfangsseiten, d.h. das ΔT bildet. Dieses ΔT beschreibt einen Hyperboloid, der angibt, dass der Aufenthaltsort der Mobilstation auf einer Hyperbel liegt. Durch die Einbeziehung einer weiteren NodeB befindet sich dann der Aufenthaltsort der Mobilstation an einem der beiden Schnittpunkte der beiden Hyperbeln.

Figur 2 zeigt schematisch eine Positionsbestimmung nach der OTDOA-Methode. Es werden darin drei Basisstationen BS1, BS2, BS3 und eine Mobilstation MS1 gezeigt. An dem Schnittpunkt der gezeigten zwei Hyperbeln H1 und H2 befindet sich die Mobilstation MS1. Für eine eindeutige Positionsbestimmung ist noch eine weitere Information nötig. So kann entweder
a) eine weitere OTDOA-Positionsbestimmung zu einer vierten Basisstation erfolgen (ergibt eine dritte Hyperbel), oder
b) in Zellen mit Sektorisierung die Information über den Sektor, in dem sich die Mobilstation MS1 befindet, zur Entscheidung herangezogen werden, oder
c) eine RTT-Messung durchgeführt werden, wie dies in Figur 2 dargestellt ist.

Mit der OTDOA-Methode erreicht man eine Genauigkeit der Positionsbestimmung der Mobilstation von ca. 80 bis 100 m.

Eine Verbesserung der OTDOA-Methode liefert die bekannte OTDOA-IPDL (Idle Period Downlink) -Methode. Die OTDOA-IPDL-Methode ist eine Erweiterung für den Fall, dass die Signale der die Mobilstation bedienenden NodeB die Signale der anderen NodeBs überdecken. Dadurch wird eine Detektion des Signals einer anderen NodeB erschwert und sogar in weiten Teilen der Mobilfunkzelle unmöglich gemacht. Damit eine Detektion von Signalen anderer NodeBs möglich ist, werden bei der OTDOA-IPDL-Methode die Übertragung der NodeB, welche die zu lokalisierende Mobilstation bedient, d.h. die sogenannte Serving NodeB, für kurze Zeitperioden, d.h. IPDLs, ausgeschaltet. Diese entstehenden Ruhepausen hinsichtlich der Übertragung dieser NodeB können dann von der Mobilstation genutzt werden, um die Empfangszeitpunkte der Signale der Nachbar-NodeBs zu detektieren. Die Pause kann mehrere Symbole lang sein, in der Regel 5 bis 10 Symbole. Dabei entspricht die Länge eines Symbols z.B. im FDD-Modus von UMTS 256 Chips und im TDD-Modus maximal 16 Chips, wobei ein Chip ca. 0.26 µs lang ist bei einer Chipfrequenz von 3.84 Mchips/s. Aufgrund der Einführung der IPDLs und somit Abschaltung der Übertragung von Signalen der interessierenden NodeB tritt für die Zeit der IPDLs ein Kapazitäts- bzw. Informationsverlust in der entsprechenden Mobilfunkzelle auf. Mit der OTDOA-IPDL-Methode erreicht man eine Genauigkeit in der Positionsbestimmung von bis zu ca. 20 m.

Aus der WO 00/42445 A1 ist ein Verfahren zur Positionsbestimmung einer Mobilstation in einem Mobilfunksystem mit einer Vielzahl von Basisstationen bekannt, mit den Verfahrensschritten:
- Anforderung einer Positionsbestimmung der Mobilstation
- und Bestimmen der Position der Mobilstation durch Messung der Laufzeit mindestens eines ersten und eines zweiten Signals von mindestens einer ersten und einer zweiten Basisstation zu der Mobilstation,
wobei pro Anforderung der Positionsbestimmung die Laufzeit mindestens eines weiteren Signals von der ersten Basisstation zu der Mobilstation und/oder von der zweiten Basisstation zu der Mobilstation gemessen wird. Ferner offenbart die WO 00/42445 A1 die Nutzung einer bestimmten Anzahl von Signalen zur Messung, die voreingestellt oder veränderlich sein kann.

Es liegt der vorliegenden Erfindung die Aufgabe zugrunde, ein Verfahren zur Positionsbestimmung bereitzustellen, bei welchen die Genauigkeit der Positionsbestimmung gegenüber bekannten Systemen erhöht wird, wobei ein steigender Signalisierungsaufwand zwischen Mobilstation und Basisstationen vermieden werden soll.

Diese Aufgabe wird durch ein Verfahren zur Positionsbestimmung gemäß dem unabhängigen Anspruch 1 gelöst. Vorteilhafte Weiterbildungen der Erfindung ergeben sich aus den abhängigen Ansprüchen.

Die vorliegende Erfindung betrifft ein Verfahren zur Positionsbestimmung einer Mobilstation in einem Mobilfunksystem mit einer Vielzahl von Basisstationen. Das Verfahren weist die Verfahrensschritte
- Anfordern einer Positionsbestimmung der Mobilstation, und
- Bestimmen der Position der Mobilstation durch Messung der Laufzeit mindestens eines ersten und eines zweiten Signals von mindestens einer ersten und einer zweiten Basisstation zu der Mobilstation,
auf, wobei pro Anforderung der Positionsbestimmung die Laufzeit mindestens eines weiteren Signals von der ersten Basisstation zu der Mobilstation und/oder von der zweiten Basis-station zu der Mobilstation gemessen und pro Anforderung der Positionsbestimmung die Anzahl der Laufzeitmessungen von der Mobilstation und/oder einer Basisstation bestimmt wird, und wobei die Anzahl der Laufzeitmessungen in Abhängigkeit von der örtlichen Umgebung der Mobilstation bestimmt wird. Bei dem Mobilfunksystem handelt es sich bevorzugt um ein UMTS-Funknetzwerk und bei der Mobilstation bzw. den Basisstationen um in einem solchen Netzwerk einsetzbare Stationen. Die Erfindung ist jedoch nicht auf UMTS-Netzwerke beschränkt. Die Anforderungen der Positionsbestimmung der Mobilstation kann entweder von der Mobilstation selbst ausgelöst werden, beispielsweise auf Grund eines Notrufs, aber auch von anderen Netzwerkelementen initiiert werden. Bei dem Signal handelt es sich bevorzugt um das CPICH (Common Pilot Channel) -Signal, welches kontinuierlich von den Basisstationen (NodeBs) ausgesendet wird. Pro Anforderung einer Positionsbestimmung der Mobilstation ist die Anzahl der Signal-Messungen nicht nur auf Eins festgelegt, sondern die Detektion eines Signals einer Basisstation erfolgt mehrmals pro einer Anforderung. Pro Anforderung der Positionsbestimmung wird die Anzahl der Laufzeitmessungen von der Mobilstation und/oder einer Basisstation bestimmt. Wird die Anzahl der Laufzeitmessungen von der Mobilstation bestimmt, so hat dies eine Einsparung von Signalisierung zwischen den Stationen zur Folge. Somit hat die Mobilstation die Verantwortung hinsichtlich der Anzahl der erforderlichen Signalmessungen, ohne dass über die Luftschnittstelle für jede Messung eine Anforderung von der Basisstation an die Mobilstation gesendet werden muss. Vorteilhaft ist, dass die Anzahl der Laufzeitmessungen in Abhängigkeit von der örtlichen Umgebung der Mobilstation bestimmt wird. Die Anzahl der Laufzeitmessungen ist dabei beispielsweise davon abhängig, ob sich die Mobilstation in einem städtischen Gebiet mit hoher Abdeckungen der Signale zu den Basisstationen, oder in einem ländlichen Gebiet, wo direkte Sichtverbindungen zwischen Mobilstation und Basisstation mit höherer Wahrscheinlichkeit vorkommen, befindet. Entsprechend der örtlichen Umgebung kann die Anzahl der Laufzeitmessungen angepasst werden.

Bevorzugt wird die örtliche Umgebung der Mobilstation durch eine erste grobe Positionsbestimmung der Mobilstation bestimmt. Dabei handelt es sich bevorzugt um eine Positionsbestimmung mittels RTT-Messung.

In einer Weiterbildung der vorliegenden Erfindung erfolgen pro Anforderung der Positionsbestimmung die Messungen der Signale von der Basisstation periodisch durch die Mobilstation. Diese periodischen Messungen von Signalen der Nachbarstationen durch die Mobilstation können ohne zusätzliche Anforderungen durch die bedienende Basisstation erfolgen. Dadurch wird wiederum der Signalisierungsaufwand über die Luftschnittstelle reduziert. Bevorzugt führt die Mobilstation periodisch in einem bestimmten Zeitrahmen t eine Anzahl N Messungen durch. So können diese Parameter beispielsweise von dem Netzwerk, d.h. durch Vorgaben des Netzwerkanbieters, bestimmt werden.

In einer Weiterbildung der vorliegenden Erfindung sendet die Mobilstation die Laufzeitmessungen an eine Basisstation, welche diese an ein Netzwerkelement weiterleitet. Bei dem Netzwerkelement handelt es sich bevorzugt um eine Funknetzwerk-Kontrolleinheit SRNC (Serving Radio Network Controller), welche die Informationen verarbeitet.

Die eingangs gestellte Aufgabe wird auch durch ein Positionsbestimmungssystem zur Bestimmung der Position einer Mobilstation in einem Mobilfunksystem unter Verwendung eines erfindungsgemäßen Verfahrens gelöst. Das Positionsbestimmungssystem weist dabei mindestens zwei Basisstationen und mindestens eine Mobilstation, welche geeignet ist, mit der Basisstation zu kommunizieren, auf.

Die vorliegende Erfindung betrifft des Weiteren eine Mobilstation und eine Basisstation zur Verwendung bei einem erfindungsgemäßen Verfahren.

Die Erfindung wird im Folgenden unter Hinweis auf die beigefügten Zeichnungen anhand von Ausführungsbeispielen näher erläutert. Die dort dargestellten Merkmale und auch die bereits oben beschriebenen Merkmale können nicht nur in der genannten Kombination, sondern auch einzeln oder in anderen Kombinationen erfindungswesentlich sein. Es zeigen:
- Figur 1: eine schematische Darstellung eines Positionsbestimmungssystems nach der Cell-ID-Methode;
- Figur 2: eine schematische Darstellung eines Positionsbestimmungssystems nach der OTDOA-Methode;
- Figur 3: eine schematische Darstellung eines Ausführungsbeispiels einer erfindungsgemäßen Positionsbestimmung; und
- Figur 4: ein Ablaufdiagram eines Ausführungsbeispiels einer Positionsbestimmung.

Die Figuren 1 und 2 wurden bereits in der Einleitung der Beschreibung erläutert, so dass auf die diesbezüglichen Ausführungen verwiesen wird.

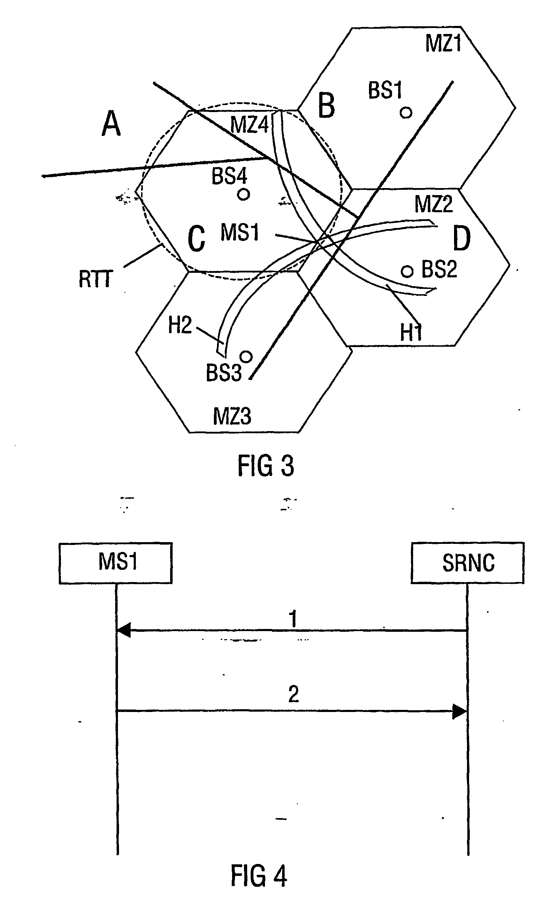

Figur 3 zeigt ein Ausführungsbeispiel einer erfindungsgemäßen Positionsbestimmung. Es wird ein UMTS-Netzwerk gezeigt. Die Basisstationen (NodeBs) BS1, BS2, BS3 und BS4 spannen jeweils Mobilfunkzellen MZ1, MZ2, MZ3 und MZ4 auf. Innerhalb der Mobilfunkzelle MZ2 besteht eine Funkverbindung zwischen der Mobilstation MS1 und der NodeB BS2. Die gezeichneten Sechs-Eck-Mobilfunkzellen stellen Abstraktionen zur besseren Vorstellbarkeit dar. In Figur 3 sind des Weiteren verschiedene Örtlichkeiten A, B, C und D angedeutet. Diese sollen örtliche Eigenschaften wie "ländlich" oder "städtisch" symbolisieren. Die Basisstation BS2 ist über eine Festnetzverbindung mit einer physikalischen Kontrolleinheit, der Funknetzwerk-Kontrolleinheit SRNC (Serving Radio Network Controller), welche nicht eingezeichnet ist, verbunden.

In dem Ausführungsbeispiel soll die Position der Mobilstation MS1 bestimmt werden. Die Ursache der Anfrage zur Positionsbestimmung kann dabei verschiedene Gründe haben. Die Anfrage kann beispielsweise von einer Applikation im Mobilfunkgerät, von einer internen Einheit im Mobilfunknetz, oder von einer externen Einheit eines anderen Mobilfunknetzes oder Kommunikationsnetzes kommen. Nachdem durch eine entsprechende Kontrolleinheit SRNC im Mobilfunknetz, welche für die zu lokalisierende Mobilstation zuständig ist, die Anfrage zur Positionsbestimmung geprüft und zur Durchführung freigegeben worden ist, kann das Mobilfunkgerät entsprechend seiner Konfiguration alle notwendigen Schritte zur Positionsbestimmung einleiten oder einleiten lassen. Anhand des Profils der Mobilstation erkennt bzw. weiß der SRNC, dass die Mobilstation MS1 alle OTDOA-Methoden zur Positionsbestimmung, d.h. auch OTDOA-IPDL, unterstützt. Weiterhin wird angenommen, dass die Mobilstation MS1 entsprechend der OTDOA-Methode Signalmessungen zu anderen Mobilfunkzellen durchführt, speziell zu mindestens drei Nachbar-Basisstationen, beispielsweise BS2, BS3 und BS4. Die Mobilstation liegt auf den Schnittpunkten der Hyperbeln H1 und H2. Eine exakte Bestimmung der Position erfolgt über die RTT-Messung. In diesem Ausführungsbeispiel kontrolliert die Netzwerk-Kontrolleinheit SRNC die durchzuführenden Schritte zum Bestimmen der Position der Mobilstation MS1 und sammelt alle Messergebnisse ein.

Durch Rufen eines Mobilteilnehmers innerhalb eines Netzes, ein sogenanntes "Paging", kann der SRNC bei Erwiderung die ungefähre Örtlichkeit der Mobilstation bestimmen. Dies entspricht einem "Anklopfen" an die Mobilstation, dass demnächst für die Mobilstation Nachrichten kommen, und erfolgt im zweidimensionalen Raum, allerdings mit einer großen Ungenauigkeit. Die Ungenauigkeit ergibt sich durch die Verarbeitungszeiten in der Mobilstation, sowie den Signallaufzeiten zwischen SRNC und Mobilstation bzw. Mobilstation und SRNC. Anschließend sendet der SRNC eine Nachricht an die Mobilstation, in welcher enthalten ist, in welchem Gebiet sich die Mobilstation ungefähr befindet.

Figur 4 zeigt den Ablauf einer Signalisierung zwischen einer Mobilstation MS1 und einem SRNC. Der SRNC sendet 1 die Nachricht "Messungs-Steuerung" an die Mobilstation MS1. Mit der Nachricht teilt der SRNC der Mobilstation MS1 erfindungsgemäß eine Anzahl von Messungen, beispielsweise sieben, mit. Der Nachricht können dabei zwei Informationselemente hinzugefügt werden. Die Informationselemente werden je nach dem eingesetzt, abhängig davon, wo die Berechnung der Position am Ende stattfindet. Bei dem ersten Informationselement führt die Mobilstation nur die Messungen durch und teilt anschließend dem SRNC die Resultate in einer separaten Nachricht mit. Das Resultat, d.h. die Position, wird dann der Mobilstation mit einer weiteren Nachricht mitgeteilt. Bei dem zweiten Informationselement findet neben den Messungen zur Positionsbestimmung auch die Berechnung in der Mobilstation statt und nur das Ergebnis wird dem SRNC mitgeteilt. Die Auswahl von sieben Messungen in diesem Ausführungsbeispiel ist dadurch begründet, da die zu lokalisierende Mobilstation sich in einem städtischen Gebiet befindet, in welchen mehr Abdeckungen der Signale zu den Basisstationen als im ländlichen Bereich vorkommen. Befindet sich eine Mobilstation in einem ländlichen Gebiet, so könnte in der Nachricht 1 von der SRNC beispielsweise drei Messungen angegeben werden. Ober die Nachricht 1 mit den beiden Informationselementen werden zusätzliche Informationen über die örtliche Beschaffenheit an die Mobilstation übertragen, woraus die Mobilstation MS1 die Anzahl der Messungen zur Positionsbestimmung ableiten kann. Alternativ wird die Anzahl der Messungen vom Netzwerk, d.h. aufgrund von Vorgaben vom Netzwerkbetreiber, bestimmt. Die Mobilstation MS1 sendet in der Nachricht 2 alle Messergebnisse an das SRNC mittels der Nachricht "Messungs-Steuerung Antwort" nach jeder Messung zurück. Alternativ fasst die Mobilstation MS1 eine bestimmte Anzahl von Messungen in einer Gruppe zusammen und sendet diese Gruppe von Messungen in der Nachricht 2 an das SRNC über die NodeB zurück.

In einem weiteren Ausführungsbeispiel gibt der SRNC in der Nachricht 1 nicht die Anzahl der Messungen vor, sondern die Mobilstation kann die Anzahl der Messungen, beispielsweise entsprechend einer der Mobilstation vorliegenden Tabelle, welche von dem Netzwerkbetreiber vorgegebene Einstellungen bzw. Werte enthält, entschieden werden.

In einem weiteren Ausführungsbeispiel enthält die Nachricht 1 einen Parameter Periodizität, d.h. die damit zusammenhängende Anzahl von Messungen bzw. den vorgegebenen Zeitrahmen. Beispielsweise können für eine Verfolgung der Mobilstation, ein sogenanntes "Tracking", periodisch 20 Messungen im Abstand von 2 Sekunden durchgeführt werden.

Die Ausführungsbeispiele wurden anhand der OTDOA-Methode erläutert. Eine Erweiterung auf die OTDOA-IPDL-Methode ist jedoch möglich. Eine entsprechende Erweiterung führt dazu, dass noch präzisere Endergebnisse erreicht werden können, da die bedienende Basisstation für kurze Zeit ihre Übertragungen ausschaltet.

Vorteilhaft können bei der vorliegenden Erfindung erste grobe Positionsinformationen abhängig von geografischen Gegebenheiten bzw. Ausbreitungsbedingungen von Funkwellen oder Signalen zur Positionsbestimmung genutzt werden, wobei die Mobilstation die Anzahl der Signalmessungen zu den Nachbar-NodeBs selbst bestimmen kann.

Weiter vorteilhaft kann unter Selbstbestimmung der Mobilstation eine Periodizität in der Signalmessung realisiert werden, wodurch eine Präzisierung der Positionsinformation aufgrund von mehreren Signalmessversuchen ohne Zwischenschaltung der SRNC erfolgen kann.

Darüber hinaus kann eine schnellere Reaktion der Mobilstation auf Änderungen der Umgebungsbedingungen hinsichtlich der Signalmessungen der Positionsbestimmung erfolgen.

Des weiteren wird der Signalisierungsaufwand zwischen SRNC und Mobilstation reduziert, da bei unzureichenden Messergebnissen keine wiederholten Anforderungen erfolgen müssen.

Durch die vorliegende Erfindung werden auch die strengen Voraussetzungen der US-Nachrichtenbehörde FCC (Federal Communications Commission)hinsichtlich der Voraussetzungen für mobile Endgeräte in Notfallsituationen gewährleistet.

## Patentansprüche

1. Verfahren zur Positionsbestimmung einer Mobilstation (MS1) in einem Mobilfunksystem mit einer Vielzahl von Basisstationen (BS1, BS2, BS3, BS4), aufweisend die Verfahrensschritte:
- Anfordern einer Positionsbestimmung der Mobilstation (MS1), und
- Bestimmen der Position der Mobilstation durch Messung der Laufzeit mindestens eines ersten und eines zweiten Signals von mindestens einer ersten und einer zweiten Basisstation zu der Mobilstation, wobei pro Anforderung der Positionsbestimmung die Laufzeit mindestens eines weiteren Signals von der ersten Basisstation zu der Mobilstation und/oder von der zweiten Basisstation zu der Mobilstation gemessen wird und pro Anforderung der Positionsbestimmung die Anzahl der Laufzeitmessungen von der Mobilstation und/oder einer Basisstation bestimmt wird,
**dadurch gekennzeichnet, dass** die Anzahl der Laufzeitmessungen in Abhängigkeit von der örtlichen Umgebung (C) der Mobilstation bestimmt wird.

2. Verfahren nach Anspruch 1,
**dadurch gekennzeichnet, dass** die örtliche Umgebung der Mobilstation durch eine erste grobe Positionsbestimmung der Mobilstation bestimmt wird.

3. Verfahren nach einem der vorhergehenden Ansprüche,
**dadurch gekennzeichnet, dass** pro Anforderung der Positionsbestimmung die Messungen der Signale von den Basisstationen periodisch durch die Mobilstation erfolgen.

4. Verfahren nach Anspruch 3,
**dadurch gekennzeichnet, dass** die Mobilstation periodisch in einem Zeitrahmen t eine Anzahl N Messungen durchführt.

5. Verfahren nach einem der vorhergehenden Ansprüche,
**dadurch gekennzeichnet, dass** die Mobilstation die Laufzeitmessungen an eine Basisstation sendet, welche diese an ein Netzwerkelement (SRNC) weiter leitet.

## Revendications

1. Procédé de détermination de la position d'une station mobile (MS1) dans un système radio mobile avec une pluralité de stations de base (BS1, BS2, BS3, BS4), présentant les étapes suivantes:
- demande de détermination de la position de la station mobile (MS1) et
- détermination de la position de la station mobile par mesure du temps de propagation d'au moins un premier et un deuxième signal d'au moins une première et une deuxième station de base vers la station mobile, le temps de propagation d'au moins un autre signal de la première station de base vers la station mobile et/ou de la deuxième station de base vers la station mobile étant mesuré pour chaque demande de détermination de position, et le nombre des mesures du temps de propagation étant déterminé par la station mobile et/ou par une station de base pour chaque demande de détermination de position,
**caractérisé en ce que**
le nombre des mesures du temps de propagation est déterminé en fonction de l'environnement local (C) de la station mobile.

2. Procédé selon la revendication 1,
**caractérisé en ce que**
l'environnement local de la station mobile est déterminé par une première détermination grossière de la position de la station mobile.

3. Procédé selon l'une des revendications précédentes,
**caractérisé en ce que**,
pour chaque demande de détermination de position, les mesures des signaux des stations de base sont effectuées périodiquement par la station mobile.

4. Procédé selon la revendication 3,
**caractérisé en ce que**
la station mobile effectue périodiquement un nombre N de mesures dans une trame temporelle t.

5. Procédé selon l'une des revendications précédentes,
**caractérisé en ce que**
la station mobile envoie les mesures du temps de propagation à une station de base qui retransmet celles-ci à un élément de réseau (SRNC).

## Claims

1. Method for determining the position of a mobile station (MS1) in a mobile communication system with a plurality of base stations (BS1, BS2, BS3, BS4), comprising the following method steps:
- requesting positioning of the mobile station (MS1), and
- determining the position of the mobile station by measuring the propagation delay of at least one first and one second signal from at least one first and one second base station to the mobile station, at least one further signal from the first base station to the mobile station and/or from the second base station to the mobile station being measured for each positioning request, and the number of propagation delay measurements being determined by the mobile station and/or a base station for each positioning request,
**characterised in that**
the number of propagation delay measurements is determined according to the local environment (C) of the mobile station.

2. Method according to claim 1,
**characterised in that**
the local environment of the mobile station is determined by an initial rough positioning of the mobile station.

3. Method according to one of the preceding claims,
**characterised in that**
the measurements of the signals from the base stations are performed periodically by the mobile station for each positioning request.

4. Method according to claim 3,
**characterised in that**
the mobile station periodically performs a number N of measurements in a time frame t.

5. Method according to one of the preceding claims,
**characterised in that**
the mobile station sends the propagation delay measurements to a base station which forwards them to a network element (SRNC) .
